Europäisches Patentamt

European Patent Office

Office européen des brevets

(11) Publication number: 0 480 043 B1

# (12) EUROPEAN PATENT SPECIFICATION

(45) Date of publication of patent specification: 10.05.95

(51) Int. Cl.⁶: **B29C 51/00**, B65D 65/38, //B29K67:00,B29K105:32

(21) Application number: 91905895.8

(22) Date of filing: 26.03.91

(86) International application number: PCT/JP91/00391

(87) International publication number: WO 91/14563 (03.10.91 91/23)

(54) TRANSPARENT POLYESTER CONTAINER.

(30) Priority: 26.03.90 JP 77746/90
18.02.91 JP 23218/91

(43) Date of publication of application:
15.04.92 Bulletin 92/16

(45) Publication of the grant of the patent:
10.05.95 Bulletin 95/19

(84) Designated Contracting States:
AT BE CH DE DK ES FR GB GR IT LI LU NL SE

(56) References cited:
FR-A- 2 174 131
GB-A- 2 118 957

Database WPIL, no. 82-38155E, volume 19, Derwent Publications Ltd., (London, GB), & JP, A, 57055922 (TEIJIN), 3 April 1982

Database WPI, no. 79-22621, volume 12, Derwent Publications Ltd., (London, GB), & JP, A, 54018374 (TEIJIN), 10 February 1979

(73) Proprietor: POLYPLASTICS CO. LTD.
3-13, Azuchimachi, 2-chome,
Chuo-ku
Osaka-shi,
Osaka 541 (JP)

(72) Inventor: KAWAGUCHI, Kuniaki
2-4-2, Higashimakado
Numazu-shi,
Shizuoka 410 (JP)
Inventor: NAKANE, Toshio
885-11, Miyajima
Fuji-shi,
Shizuoka 416 (JP)
Inventor: KONUMA, Hiroaki
371-7, Okitsu-Inouecho
Shimizu-shi,
Shizuoka 424-02 (JP)
Inventor: KAGEYAMA, Yukihiko
815, Gendojicho
Fujinomiya-shi,
Shizuoka 418 (JP)

Database WPI, no. 78-59702A, volume 33, De-rwent Publications Ltd., (London, GB), & JP, A, 53079969 (UNITIKA) 14 July 1978

Database WPIL, no. 87-311419, volume 44, Derwent Publications Ltd., (London, GB), & JP, A, 62221314 (HOUSE SHOKUHIN KOGY), 29 September 1987

Inventor: **HIJIKATA, Kenji**
**8-8, Fujimidai**
**Mishima-shi,**
**Shizuoka 411 (JP)**


⑦₄ Representative: **W.P. THOMPSON & CO.**
**Eastcheap House**
**Central Approach**
**Letchworth,**
**Hertfordshire SG6 3DS (GB)**

**Description**

The present invention relates to a method of producing a polyester container, and more particularly a polyester container having a high crystallinity and excellent transparency and thermal distortion resistance even in a high-temperature heating atmosphere.

Aromatic polyesters including polyethylene terephthalate (PET) can be formed from a resin sheet thereof into a container by thermoforming, such as vacuum forming or pressure forming, and is so excellent in the chemical resistance, resistance to permeation by gases and thermal resistance that in recent years they has widely been used in the production of containers to be in contact with chemicals and foods.

Although a nonoriented, amorphous PET sheet can be formed into a container having an excellent transparency when it is thermoformed at such a temperature that no crystallization proceeds, the container thus produced is so poor in the thermal resistance that it deforms in a heating atmosphere of about 80°C or above and, due to its crystallizability, causes crystallization to proceed when used in a heating atmosphere, so that thermal shrinkage and lowering in the transparency occur, which limits its applications. On the other hand, a transparent PET sheet crystallized by biaxial stretching cannot easily be thermoformed due to its orientation. When the forming temperature of the PET container is raised for the purpose of improving the thermal and mechanical resistances, crystallization proceeds to bring about whitening, so that the transparency lowers. When copolymerization is conducted to make the crystallinity negligible, it is possible to produce a container having an improved transparency, but the mechanical properties, particularly thermal resistance, are lowered, and the resultant container cannot withstand the use at a high temperature.

In the case of polybutylene terephthalate (PBT), due to its high crystallinity, it is difficult to produce a container having an excellent transparency by thermoforming.

Thus, it is very difficult for the aromatic polyester to have both of mechanical properties or thermal resistance and transparency derived from the crystallinity. Therefore, a container having both of these properties has earnestly been desired in the art.

JP-A-57 055 922 describes the formation of a container by thermoforming a sheet or film of non-crystalline aromatic polyester having a glass transition point of at least 86°C and comprising (A) an aromatic carboxylic acid component and (B) a glycol component containing at least 75 mol% of 1,4 cyclohexane dimethanol (to provide high transparency) and ethylene glycol, 1,3-propane diol or 1,4 -butane diol.

The present inventors have made intensive studies with a view to solving the above-described problem and, as a result, have found that the use of a starting polymer comprising a polybutylene terephthalate copolymer having given amounts of particular comonomer units introduced thereinto and satisfying particular requirements makes it possible to provide a container having both of transparency and high crystallinity and capable of maintaining the transparency and the thermal resistance even in a heating atmosphere, which has led to the completion of the present invention.

Accordingly the present invention relates to a method of producing a transparent polyester container by thermoforming an unstretched copolyester sheet of low crystallinity, characterised in that said sheet is produced by melt-molding a copolyester resin comprising 70 to 99 molar % of repeating units of an ester of terephthalic acid or an ester forming derivative thereof with 1,4-butanediol and having a quantity of heat of crystallization satisfying the following formula (1);

$$Hc \leq 35.0 \ (J/g) \qquad (1)$$

wherein Hc is an absolute value of a quantity of heat of crystallization (J/g) on temperature fall as measured by differential thermal analysis wherein the resin melted at 240°C is cooled at a rate of 500°C/min and rapidly cooling the molding to form a sheet having a low crystallinity.

The copolyester used in the method of the present invention comprises 70 to 99 molar % of structural units composed of an ester unit comprising a terephthaloyl group end an oxyalkylene group.

Starting compounds necessary for forming the copolyester used in the method of the present invention will now be described in due order. At the outset, a starting compound necessary for forming a terephthaloyl group is terephthalic acid or an ester forming derivative thereof, and examples thereof include at least one member selected from among dialkyl esters and diacyl derivatives. Among them, terephthalic acid and its dialkyl esters are preferred, and dimethyl terephthalate is particularly preferred. The oxyalkylene group for forming a polybutylene terephthalate unit of the copolyester constituting the present invention is introduced through the use of 1,4-butanediol as a monomer material.

3

A starting compound for a comonomer for forming remaining structural units of the copolyester is at least one member selected from among a polycarboxylic acid and its derivative, a polyhydroxycarboxylic acid and its derivative, a polyhydric phenol or its derivative, a polyhydric aliphatic (including alicyclic) alcohol and its derivative, a polyamine and its derivative, a polyhydroxyamine and its derivative, a polyamide and its derivative, a polyisocyanate and its derivative and a polyisocyanurate and its derivative, and all of the remaining structural units are other than terephthalic acid and its ester forming derivative and 1,4-butanediol.

In the copolyester used in the method of the present invention, at least one starting compound selected from the group consisting of the above-described compounds should be used as the starting compound for the comonomer. The molar content of these comonomers based on the whole structural units should be 1 to 30 molar %, particularly preferably 3 to 20 molar. When the molar content is less than 1 molar %, the crystallization rate of the copolyester is so high that it becomes difficult to form a sheet having a low crystallinity and therefore no transparency can be obtained and, at the same time, the thermoformability is remarkably lowered due to a small difference between the glass transition point and the cold crystallization temperature. On the other hand, when the molar content is larger than 30 molar %, the relative crystallinity of the container produced by thermoforming does not increase, so that the lowering in the mechanical strengths and heat distortion properties becomes significant.

The copolyester used in the method of the present invention should satisfy a requirement represented by the following formula (1) besides the above-described requirements:

$$\Delta Hc \leq 35.0 \ (J/g) \qquad (1)$$

wherein $\Delta Hc$ is an absolute value of a quantity of heat of crystallization (J/g) on temperature fall as measured by differential thermal analysis wherein the resin melted at 240°C is cooled at a rate of -500°C/min.

When the $\Delta Hc$ of the copolyester is larger than 35.0 (J/g), it is difficult to form a sheet having a low crystallinity after melt extrusion, so that it becomes difficult to provide a container satisfying the requirements of the present invention, i.e., a relative crystallinity of 50% or more, a light transmittance of 75% or more and a capability of sufficiently maintaining this light transmittance value even when heat-treated at 120°C. A copolyester satisfying a requirement represented by the formula $0 \leq \Delta Hc \leq 30.0 \ (J/g)$ is particularly preferred.

The intrinsic viscosity of the copolyester resin is preferably 0.7 or more from the viewpoint of the formability. The intrinsic viscosity mentioned herein refers to one measured in o-chlorophenol at 25°C.

The above-described copolyesters can be prepared by interfacial polycondensation, melt polymerization, solution polymerization, etc., through the utilization of known condensation and interesterification reactions. It is possible to prepare a product having a higher degree of polymerization by the solid phase polymerization wherein the resultant resin is heat-treated under a reduced pressure or in the presence of an inert gas.

A sheet which is lowly crystalline, transparent and nonoriented can be formed by drying the copolyester resin prepared by the above-described process, extruding the dried resin into a sheet by means of an extruder provided with a T-die and bringing the sheet into contact with a casting drum (chill roll) for rapid cooling.

Some description will now be made on a preferred thickness of the sheet. When the thickness of the sheet is too large, only the surface becomes transparent when the sheet is cooled rapidly and the inside of the sheet is gradually cooled to bring about whitening. Further, when such a sheet is thermoformed, the thermoformability is remarkably spoiled due to poor shapeability. When the thickness of the sheet is excessively small, the mechanical strength of the sheet per se cannot be exhibited, so that the excellent practical effect is reduced. Therefore, the thickness of the sheet is preferably 0.05 to 2.00 mm, still preferably 0.10 to 1.00 mm.

Then, the sheet is subjected to thermoforming to give a container having a desired shape. The term "thermoforming" used in the present invention is a general term for the conventional forming methods such as vacuum forming and pressure forming. Examples of tie forming machine used include a vacuum forming machine, a pressure forming machine and a universal forming machine wherein use is made of both of vacuum and pressure. In the thermoforming, the sheet is heated for softening and then rapidly brought into close contact with a mold in a vacuum or under elevated pressure for shaping.

The above-described thermoforming promotes the crystallization of the resin and causes the resin to have a relative crystallinity of 50% or more. It is surprising that in the case of the resin sheet of the present invention, the sheet does not become opaque even after crystallization and can stably maintain a light

EP 0 480 043 B1

transmittance of 75% or more in the subsequent heat treatment.

In the method according to the present invention, as described above, the thermoforming enables the container to have both of high crystallinity and transparency. A further improvement in the transparency can be attained by subjecting the sheet to a particular maturing treatment prior to the thermoforming.

Examples of the maturing method include one wherein the sheet is heated at a temperature around the glass transition point of the resin for a given period of time, one wherein the sheet is heated to a given temperature at a low temperature rise rate, and one wherein the sheet is heated from room temperature to a given temperature in a plurality of stages. Specific examples thereof include a method wherein the sheet is immersed in a heating medium at a predetermined temperature, such as hot water, a method wherein the sheet is heated in a drier at a predetermined temperature, a method wherein hot air is blown against the sheet, and a method wherein use is made of radiant heat, such as infrared radiation.

The relative crystallinity of the transparent, highly crystalline container produced by the method of the present invention is preferably 50% or more after thermoforming. The term "relative crystallinity" used herein is intended to mean a value determined by the DSC method which will be described below. When the relative crystallinity of the container is less than 50%, the heat resistance at a high temperature remarkably lowers. Therefore, the relative crystallinity of the final product is preferably 50% or more from the practical viewpoint. The present invention has enabled such a container to be provided.

The transparency of the container is evaluated by light transmittance. The light transmittance of the container is preferably 75% or more and it is preferred from the practical point of view that the container can maintain a light transmittance of 75% or more even when heat-treated at 120°C. The present invention has enabled such a container to be provided.

In the present invention, the copolyester resin may be used in combination with a small amount of other thermoplastic resin as an auxiliary component. Examples of the thermoplastic resin include polycarbonate, polyethylene terephthalate, polyethylene terephthalate copolymer and polyarylate. They may be used alone or in a combination of two or more of them.

Further, it is a matter of course that the copolyester resin may be blended with known substances generally added to thermoplastic resins, i.e., stabilizers such as ultraviolet absorbers, antistatic agents, flame retardants, flame retardation assistants, coloring agents such as dyes and pigments, lubricants, plasticizers, crystallization accelerators, nucleating agents, inorganic fillers, etc.

As is apparent from the foregoing description, the highly crystalline, transparent container produced from a particular resin by the process of the present invention has the following excellent effects:

1) by virtue of its highly crystallinity, i.e., a crystallinity of as high as 50% or more, the container has a high heat resistance, i.e., has a heat distortion resistance and can maintain a light transmittance of 75% or more even in a heating atmosphere at about 120°C, which renders the container advantageously usable as a container of foods for cooking in a microwave oven (ovenable trays), a heat-resistant cup, etc., particularly as a cooking container wherein the contents can be observed from the outside thereof, and further it is suitable as a container which should be heat-sterilized or a container into which a material should be poured at a high temperature, and

2) since the transparency has been imparted without detriment to the mechanical properties, the container can be used as a protective container wherein the contents thereof can be observed from the outside thereof.

The present invention will now be described in more detail by way of the following Examples, though it is not limited to these Examples only.

Measurement conditions for main characteristic values are as follows.

(1) Melting point:

It is measured at a temperature rise rate of 10°C/min by differential thermal analysis (DSC) according to JIS K 7121.

(2) Heat of crystallization during rapid cooling:

A quantity of heat of crystallization [$\Delta Hc$ (J/g)] on temperature fall is measured in a helium atmosphere by differential thermal analysis wherein the resin melted at 240°C is cooled at a rate of 500°C/min.

5

(3) Relative crystallinity:

The sheet is cut to prepare a sample for DSC measurement, and the measurement is conducted through the use of a DSC apparatus. The relative crystallinity (CR) is calculated by making use of the following equation:

$$CR = [(\Delta Hm - |\Delta Hcc|)/|(\Delta Hc)_{HOMO}|] \times 100 \; (\%)$$

wherein $\Delta Hm$ is the heat of melting in the measurement at a temperature rise rate of $10°C/min$;

$\Delta Hcc$ is the heat of transition of the cold crystallization peak in the measurement at a temperature rise rate of $10°C/min$; and

$(\Delta Hc)_{HOMO}$ is the heat of crystallization in the measurement at a temperature fall rate of $10°C/min$ from a molten state of unmodified PBT homopolymer.

The crystal melts during the measurement under a rising temperature condition after the cold crystallization has proceeded. Therefore the relative crystallinity of the sample per se is determined by subtracting the absolute value of transition of the cold crystallization peak ($\Delta Hcc$) from the absolute value of the heat of melting of the crystal ($\Delta Hm$).

(4) Light transmittance:

A sheet is cut and the light transmittance thereof is measured according to JIS K 7105. The light transmittance of the formed article is measured in the same manner as that described in connection with the measurement of the light transmittance of the sheet, except that part of the side of the container is cut.

The transparency was expressed according to the following criteria:

◎: very excellent:    a light transmittance of 90% or more
○: good                  a light transmittance of 80% to 90% exclusive
△: relatively good:   a light transmittance of 75% 80% exclusive
X: poor                   a light transmittance of less than 75%

(5) Forming shrinkage:

The forming shrinkage ($X_1$) is calculated through the use of the following equation:

$$X_1 = [(V_M - V_c)/V_M] \times 100 \; (\%)$$

wherein $V_c$ is the internal volume of a formed article in a cup form, and
$V_M$ is the internal volume of a cavity mold.

(6) Heat shrinkage:

The filling shrinkage ($X_3$) is calculated through the use of the following equation:

$$X_3 = [(V_c - V_H)/VC) \times 100 \; (\%)$$

wherein $V_c$ is the internal volume of a formed article in a cup form, and
$V_H$ is the internal volume of a formed article in a cup form after the cup is placed in a blast drier at $120°C$ for 10 min.

(7) Light transmittance and relative crystallinity after heating container:

A formed article in a cup form is placed in a blast drier at $120°C$ for 10 min, part of the cup is cut, and the light transmittance and the relative crystallinity are determined according to JIS K 7105 and under the same condition as that described in the above item (3), respectively. The transparency was expressed according to the same criterion as that described in the above item (4).

Production Example 1 (Synthesis of polyester A)

A reactor provided with an agitator and a distilling tube was charged with 287.9 parts by weight of dimethyl terephthalate, 253.8 parts by weight of 1,4-butanediol and 36.8 parts by weight of ethylene oxide (2 mol) adduct of 2,6-dihydroxynaphthalene together with a predetermined amount of tetrabutyl titanate as an interesterification catalyst, and the reactor was sufficiently purged with nitrogen. The temperature was raised to 160°C under atmospheric pressure, and agitation was started. Further, the temperature was gradually raised to distill off methanol formed as a by-product. When the temperature reached 240°C, the reactor was gradually evacuated and the agitation was continued under a pressure of 0.1 Torr for 2.5 hr, thereby preparing a copolyester resin.

The percentage introduction of the comonomer other than dimethyl terephthalate and 1,4-butanediol was determined by $^1$H-NMR measurement wherein use was made of trifluoroacetic acid-d$_1$ as a solvent. Then the polyester resin was pelletized and subjected to a solid phase polymerization in a nitrogen stream to prepare a polyester having a high degree of polymerization and an intrinsic viscosity of 1.30. The resultant polyester was evaluated on the above-described properties. The results are given in Table 1.

Production Examples 2 to 4 (Polyesters B to D)

Various copolyesters were prepared in the same manner as that of Production Example 1, except that p-xylidene glycol, ethylene oxide (2 mol) adduct of 2,2-bis(4-hydroxycyclohexyl)propane and cyclohexane-dimethanol were used in amounts specified in Table 1 instead of the ethylene oxide (2 mol) adduct of 2,6-dihydroxynaphthalene. Then, the resultant polester resins were subjected to a solid phase polymerization in the same manner as that of Production Example 1, and the properties of the polyester resins were evaluated. The results are given in Table 1.

Comparative Production Example 1 (Polyester E)

Polymerization and solid phase polymerization were conducted in the same manner as that of Production Example 1, except that the amounts of addition of 1,4-butanediol and ethylene oxide (2 mol) adduct of 2,6-dihydroxynaphthalene were varied as specified in Table 1, thereby preparing a copolyester, and the properties of the polyester resins were evaluated. The results are given in Table 1.

Comparative Production Example 2 (Polyester F)

Polymerization was conducted by making use of dimethyl terephthalate and 1,4-butanediol in starting monomer ratios specified in Table 1, thereby preparing polybutylene terephthalate resin (PBT). The resultant polyester was subjected to a solid phase polymerization in the same manner as that of Production Example 1, and the properties of the polyester were evaluated. The results are given in Table 1.

Examples 1 to 4 and Comparative Example 1

In order to demonstrate the difference in the properties of vacuum-formed articles due to the difference in the staring polyester, polyesters A to E were evaluated under the same T-die sheet forming conditions and sheet thickness. Specifically, starting polyesters were dried in a blast drier at 90°C for 5 hr and then extruded through a T-die having a width of 800 mm on a water cooling type cooling roll at 25°C. The resultant sheets had a thickness of 0.30 mm. Part of each sheet was cut to determine the light transmittance. Then vacuum forming was conducted was a vacuum forming machine under conditions of a plug mold temperature of 80°C, a cavity mold temperature of 100°C and a forming time of 20 sec to make cups each having a depth of 45 mm and a diameter of 90 mm. Part of the side of each container was cut to determine the light transmittance. The evaluation of the formed articles was conducted by the above-described methods. The results are given in Table 2.

Comparative Example 2

A sheet (thickness: 0.3 mm) was formed from polyester F in the same manner as that of Example 1. The sheet was in a remarkably whitened state and therefore unsuitable for use as a forming material.

7

Examples 5 to 8

Polyesters A to D were melt-molded into sheets in the same manner as that of Example 1. Then, the sheets were matured in a thermostatic oven at various temperatures and times specified in Table 3 and subsequently subjected to vacuum forming. The resultant containers were evaluated, and the results are given in Table 3.

[Table 1]

| polymer No. | Prodn. Ex. 1 | Prodn. Ex. 2 | Prodn. Ex. 3 | Prodn. Ex. 4 | Comp. Prodn. Ex. 1 | Comp. Prodn. Ex. 2 |
|---|---|---|---|---|---|---|
| | A | B | C | D | E | F |
| DMT (pts.wt.)*1 | 287.9 | 298.8 | 253.7 | 294.1 | 227.0 | 308.7 |
| BD (pts.wt.)*2 | 253.8 | 256.5 | 211.9 | 245.6 | 158.0 | 286.4 |
| DHN (pts.wt.)*3 | 36.8 | 0 | 0 | 0 | 145.1 | 0 |
| PXG (pts.wt.)*4 | 0 | 31.9 | 0 | 0 | 0 | 0 |
| BHC (pts.wt.)*5 | 0 | 0 | 85.8 | 0 | 0 | 0 |
| CHD (pts.wt.)*6 | 0 | 0 | 0 | 43.6 | 0 | 0 |
| introduction of comonomer (mol %) | 10.1 | 15.0 | 20.0 | 19.8 | 50.1 | 0 |
| intrinsic viscosity | 1.30 | 1.29 | 1.18 | 1.20 | 0.87 | 1.49 |
| Tm (°C) | 201 | 188 | 177 | 179 | -*7 | 222 |
| ΔHc (J/g) [-500°C/min] | 24.1 | 17.0 | 14.0 | 15.3 | -*7 | 38.6 |

Note:  *1: dimethyl terephthalate
*2: 1,4-butanediol
*3: ethylene oxide (2 mol) adduct of 2,6-dihydroxynaphthalene
*4: p-xylidene glycol
*5: ethylene oxide (2 mol) adduct of 2,2-bis(4-hydroxycyclohexyl)propane
*6: cyclohexanedimethanol
*7: immeasurable

[Table 2]

| | | Ex. 1 | Ex. 2 | Ex. 3 | Ex. 4 | Comp. Ex. 1 |
|---|---|---|---|---|---|---|
| polymer No. | | A | B | C | D | E |
| evaluation of rapidly cooled product | transparency | ◎ | ◎ | ◎ | ◎ | ◎ |
| | relative crystallinity (%) | 47.1 | 38.8 | 26.0 | 25.1 | – *1 |
| thermoforming condition | plug temp. (°C) | 80 | do. | do. | do. | do. |
| | cavity temp. (°C) | 100 | do. | do. | do. | do. |
| | forming time (sec) | 20 | do. | do. | do. | do. |
| evaluation of formed article | transparency | ◎ | O | Δ | O | ◎ |
| | relative crystallinity (%) | 78.2 | 74.0 | 71.0 | 68.8 | – *1 |
| | forming shrinkage (%) | 1.4 | 1.3 | 1.3 | 1.3 | 1.5 |
| | heat shrinkgae (%) | 1.0 | 0.9 | 0.7 | 0.7 | 25.8 |
| evaluation of formed article after heating (120°C, 10 min) | transparency | O | O | Δ | O | ◎ |
| | relative crystallinity (%) | 78.2 | 74.3 | 71.0 | 68.9 | – *1 |

Note: *1: immeasurable

[Table 3]

| | | Ex. 5 | Ex. 6 | Ex. 7 | Ex. 8 |
|---|---|---|---|---|---|
| polymer No. | | A | B | C | D |
| evaluation of rapidly cooled product | transparency | ◎ | ◎ | ◎ | ◎ |
| | relative crystallinity (%) | 47.1 | 38.8 | 26.0 | 25.1 |
| maturing condition | maturing temp. (°C) | 45 | 40 | 45 | 45 |
| | maturing time (min) | 5 | 10 | 15 | 15 |
| evaluation of matured product | transparency | ◎ | ◎ | ○ | ◎ |
| thermoforming condition | plug temp. (°C) | 80 | do. | do. | do. |
| | cavity temp. (°C) | 100 | do. | do. | do. |
| | forming time (sec) | 20 | do. | do. | do. |
| evaluation of formed article | transparency | ◎ | ◎ | ○ | ○ |
| | relative crystallinity (%) | 78.1 | 74.4 | 71.0 | 69.4 |
| | forming shrinkage (%) | 1.9 | 1.8 | 1.8 | 2.0 |
| | heat shrinkage (%) | 1.2 | 1.3 | 0.9 | 0.7 |
| evaluation of formed article after heating (120°C, 10 min) | transparency | ◎ | ◎ | ○ | ○ |
| | relative crystallinity (%) | 78.3 | 74.5 | 71.1 | 69.9 |

Claims

1. A method of producing a transparent polyester container by thermoforming an unstretched copolyester sheet of low crystallinity, characterised in that said sheet is produced by melt-molding a copolyester

11

resin comprising 70 to 99 molar % of repeating units of an ester of terephthalic acid or an ester forming derivative thereof with 1,4-butanediol and having a quantity of heat of crystallization satisfying the following formula (1);

$$Hc \leq 35.0 \ (J/g) \qquad (1)$$

wherein Hc is an absolute value of a quantity of heat of crystallization (J/g) on temperature fall as measured by differential thermal analysis wherein the resin melted at 240°C is cooled at a rate of 500°C/min and rapidly cooling the molding to form a sheet having a low crystallinity.

2. A method according to claim 1, characterised in that the copolyester sheet is matured before thermoforming thereof.

3. A method according to claim 1 or 2, characterised in that the intrinsic viscosity of the copolyester resin is 0.7 or more.

4. A method according to any of claims 1 to 3, characterised in that the copolyester sheet is produced by the T-die process.

5. A method according to any one of claims 1 to 4, characterised in that the thickness of the copolyester sheet is 0.05 to 2.00mm.

**Patentansprüche**

1. Verfahren zur Herstellung eines transparenten Polyesterbehältnisses durch Warmverformen einer niedrigkristallinen ungereckten Copolyesterfolie, dadurch **gekennzeichnet,** dass die Folie durch Schmelzgiessen (melt moulding)eines Copolyesterharzes, das 70 bis 99 Mol.% sich wiederholende Einheiten eines Terephthalsäureesters oder eines 1,4-Butandiolesterderivats davon umfasst und dessen Kristallisationswärme die folgende Gleichung (1) erfüllt:

$$Hc \leq 35,0 \ (J/g) \qquad (1)$$

wobei Hc der absolute Wert der Kristallisationswärme (J/g) bei Temperaturabnahme ist, der mit Differenzthermoanalyse bestimmt wird, wobei das Harz bei 240°C geschmolzen wird und mit einer Rate von 500°C/min abgekühlt wird, und das Formteil rasch abgekühlt wird, um eine niedrigkristalline Folie zu bilden.

2. Verfahren gemäss Anspruch 1, dadurch **gekennzeichnet,** dass die Copolyesterfolie vor der Warmverformung gehärtet wird.

3. Verfahren gemäss einem der Ansprüche 1 oder 2, dadurch **gekennzeichnet,** dass die intrinsische Viskosität des Copolyesterharzes 0,7 oder mehr beträgt.

4. Verfahren gemäss einem der Ansprüche 1 bis 3, dadurch **gekennzeichnet,** dass die Copolyesterfolie nach dem T-Düsenverfahren (T-die process) hergestellt wird.

5. Verfahren gemäss einem der Ansprüche 1 bis 4, dadurch **gekennzeichnet,** dass die Dicke der Copolyesterfolie 0,05 bis 2 mm beträgt.

**Revendications**

1. Un procédé de production d'un récipient en polyester transparent par thermoformage d'une feuille de copolyester non étirée à basse cristallinité, caractérisé en ce que ladite feuille est produite par moulage à l'état fondu d'une résine copolyester comprenant 70 à 99 mol % de motifs récurrents d'un ester de l'acide téréphtalique, ou d'un dérivé formateur d'ester de celui-ci, avec le 1,4-butanediol et ayant une quantité de chaleur de cristallisation satisfaisant à la formule (1) suivante :

$$Hc \leq 35,0 \ (J/g) \qquad (1)$$

12

dans laquelle Hc est une valeur absolue d'une quantité de chaleur de cristallisation (J/g) par abaissement de température telle que mesurée par une analyse thermique différentielle où la résine fondue à 240°C est refroidie à une vitesse de 500°C/min, et refroidissement rapide de la feuille moulée pour former une feuille ayant une basse cristallinité.

2. Un procédé selon la revendication 1, caractérisé en ce que la feuille de polyester est vieillie avant son thermoformage.

3. Un procédé selon la revendication 1 ou 2, caractérisé en ce que la viscosité intrinsèque de la résine copolyester est de 0,7 ou plus.

4. Un procédé selon l'une quelconque des revendications 1 à 3, caractérisé en ce que la feuille de polyester est produite par la technique de la filière en T.

5. Un procédé selon l'une quelconque des revendications 1 à 4, caractérisé en ce que l'épaisseur de la feuille de copolyester est de 0,05 à 2,00 mm.